# EUROPEAN PATENT APPLICATION

(11) **EP 2 144 191 A1**
(43) Date of publication of application: **13.01.2010**
(21) Application number: 08159905.2
(22) Date of filing: 08.07.2008
(51) Int. Cl.: G06Q 10/00

(54) **Method and system for monitoring material flows**

(71) Applicant: TAMTRON OY, 33561 Tampere (FI)
(72) Inventor: Asikainen, Pentti, 35800 Mänttä (FI)
(74) Representative: Kupiainen, Juhani Kalervo

(57) **Abstract**

The invention relates to a method and a system for monitoring material flow. The invention can be applied for e.g. monitoring amounts of various materials in stock and transportation, and for detecting possible loss of materials under storage or transportation. Prior art solutions have e.g. a disadvantage that achieved data of material flows is not accurate nor easily available. It is also difficult to detect and track possible losses of material or errors in stock accounting system. The object of the invention is achieved with a solution in which materials are weighed (60-68, 70-78) in connection with transferring (10) the material to or from a setting place (17, 41). The information is stored in server equipment (40, 41) which is connected to a network, such as Internet (99). This allows real time monitoring of material flows including online data on material inventory amounts and material flows as well as quick detection of possible losses of material.

## Description

### Technical field

The invention relates to a method and a system for monitoring material flows. The invention can be applied for e.g. monitoring stock and transport of various materials, including e.g. detecting current amounts and changes of materials in stock, amounts of incoming and outgoing materials, amounts of consumed materials and possible loss of materials under storage or transportation.

### Background technology

The present logistic material flows include transportation and storage of large quantities of materials/goods. Monitoring of the material flows is essential.

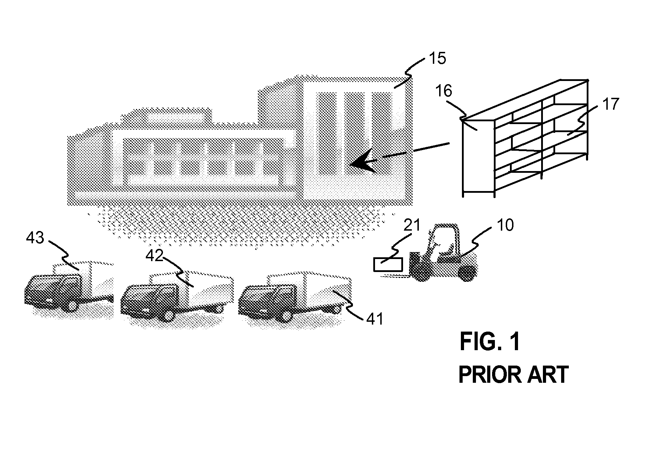

Figure 1 illustrates a prior art warehouse 15. Materials are delivered with trucks 14a-14c to the premises of the warehouse. Goods 21 that are addressed and delivered to the warehouse are unloaded from the truck and they are transferred to the assigned stock locations 16, such as shelves 17, at the warehouse 15. Forklifts 10 and other transfer means can be used for the transfer of goods within the warehouse premises. Goods 21 are transported out from the warehouse in a corresponding manner. The determined goods are transferred with a transfer means 10 from the assigned stock locations 17 to a transport vehicle 14a-14c, such as a truck. The truck will then transport the goods to the determined destination. It is usual that same transport vehicles 14a-14c, such as trucks, can both deliver goods to the warehouse and deliver goods out from the warehouse. It is also possible that the premises include a factory, power plant etc., whereby some of the materials is consumed, and new products/materials may be produced.

It is usual that there are computer systems at warehouse premises whereby incoming and outgoing goods are recorded into the stock accounting program of the system. The material data can be input to the system e.g. manually based on the freight warrants, by reading bar codes or RFID (Radio Frequency Identification) devices/tags attached to the goods.

Some disadvantages are related to the prior known solutions for monitoring material flows. There tends to be loss of material in the material handling processes. Such losses may be due to mishandling of material or theft, for example. Especially, losses are often not noticed with materials which cannot be recorded to the accounting system piece by piece. Thus, due to the losses there may be errors in the available information on the amounts of material. Also, if loss of material has occurred, it is not possible to know, where and when the loss has taken place.

If the information stored in the stock accounting programs is based on manually input data of the stock items, there may also be errors in the feeding of the data. It is also possible that the information included in the bar codes or RFID devices is not correct concerning the amount of material in a package. This may also cause erroneous information on the stock quantities and the transported quantities as well as quantities of consumed materials.

Further, the stock accounting programs are usually available locally at the storage premises, and reports of the material flows are listed perhaps once a month for monitoring purposes. The personnel performing the monitoring may also be located at a distance from the actual warehouses. Therefore, it may take long until possible errors or irregularities in the material flows can be noticed.

### Summary of the invention

The purpose of the present invention is to avoid or reduce the disadvantages of the prior art which were described above.

The object of the invention is achieved with a solution, in which material is weighed when material is transferred to a setting place and when it is transferred out from the setting place. The setting place can be a stock location in a warehouse or a transport location in a transport vehicle, for example. The weighing data is stored into server equipment, and the stored data can be read through a network, into which the server equipment is connected. Thus it is possible to monitor material flows in real time from a place where connection to the network is possible.

The method for monitoring material flows, in which material flow material is transferred to at least one setting place, and material is transferred out from said at least one setting place, is **characterised in that** the method includes at least the following phases:
- at least one piece of material is transferred to or from a setting place,
- said piece of material is weighed in connection with the transfer in order to achieve a weighing result,
- the weighing result is stored in a server equipment
- at least part of the data stored in the server equipment is read via a data transfer network, such as Internet.

A system for monitoring material flows, in which material flow material is transferred to at least one setting place, and material is transferred out from said at least one setting place with transfer means, is **characterised in that** the system includes:
- weighing means in connection with the material transfer means for measuring weight of at least one piece of material which is transferred to or from a setting place, to achieve a weighing result,
- server equipment including means for storing said weighing result,
- means for connecting the server to a data transfer network, such as Internet, to facilitate reading of data stored in the server equipment data via the network.

Some preferable embodiments of the invention are described in the dependent claims.

In one embodiment of the invention information on the amount of material in a setting place is determined on the basis of the weighing data of the material transferred into the setting place and/or amount of material transferred out from the setting place, together with the amount of material at the setting place before said transfer(s) of the material. The weight data of current amount of material as well as amounts of material flows to/from the setting place is preferably stored in the server equipment.

In one embodiment of the invention it is also possible to store reference data to the server equipment, which reference data relates to the material which is transferred to or from the setting place or being stored in the setting place. Such reference data can be achieved e.g. from a stock account system, from bar codes or RFID devices attached to the materials, or from further scales. When the weighing data and reference data are available at the server equipment, it is also possible to detect errors or losses in the material flow.

In one embodiment of the invention the setting place is a stock location of a warehouse, such as a shelf. Thus the materials that are transferred to the stock location are weighed in connection with the material transfer, and the materials that are transferred out from the stock location are also weighed in connection with the material transfer. The weighing results are stored at the server equipment, whereby the data can be read via a data transfer network. In this embodiment, reference data may be data which is input to a stock accounting system, it may be data which is read from RFID devices or bar codes that are attached to the materials/goods. It is also possible that some or all stock locations are equipped with scales, by which it is possible to weigh the current weight of the materials which are placed to the stock location. In this case, the weight values received from the scales of the stock locations can also or alternatively be used as reference data.

In another embodiment of the invention the setting place is a transport location in a transport vehicle wherein the materials are transported. Thus the materials that are transferred to the transport location are weighed in connection with the material transfer, and the materials that are transferred out from the transport location are also weighed in connection with the material transfer. The weighing results are stored at the server equipment, whereby the data can be read via a data transfer network. In this embodiment, the reference data may also be data which is input to a stock accounting system, it may be data which is read from RFID devices or bar codes that are attached to the materials/goods. Further, it is possible that a transport vehicle is weighed when it enters premises and when it exits the warehouse premises. The difference on weights corresponds to the change of load weight, and it can be used as reference data.

The above two embodiments can also be combined, whereby same weighing results of the transferred material can be used for monitoring material flow at the stock locations as well as at the transport locations.

In one embodiment of the invention transport vehicles are weighed within two premises. The transport vehicle is weighed when it exits first premises and when it enters second premises. These weighing results can be compared in order to detect possible changes of load during the travelling between the first and second premises. It is also possible to compensate fuel compensation, refuelling, and possible change in the number of passengers in the determination of the change in the load weight.

It is also possible to provide weighing device, transfer means or a transport vehicle with a location determination means, such as a GPS (Global Positioning System) device. This way it is possible to store information on the weighing location together with the weighing results, and the monitoring system thus gets the information on where the weighing has been done. For example, it is possible to detect whether the weighing has been done at the storage location, in a location of a transport vehicle, at a location of a production line of a factory or at a material feeding location of a power plant, for example.

In one further embodiment of the invention a determined threshold value for a weight value or a comparison result can be stored in the monitoring system. The system then compares the threshold value with some measured value of determined magnitude which relates to the material stored or transferred. If the measured value exceeds the threshold value, or alternatively goes below the threshold value, the system gives an alarm output for the user. This way it is possible to get alarm information e.g. relating to the weight of material in a determined setting place, weights of materials transferred to or from the setting place, and detected losses of material.

Significant advantages can be achieved with the invention when compared to the prior known solutions. It is possible to have continuously updated real time inventory information on the stock, as well as information on the amounts of incoming and outgoing materials, consumed materials, produced materials etc. It is also possible to use the acquired information for detecting losses of materials/goods. This information can be used to reveal the time and location where the loss has occurred. When the information is stored in server equipment which is connected to a data network, it is possible to use the information at any location where there is a data transfer connection to the network. Thanks to the real time information it is possible to start required countermeasures quickly if unexpected situations occur in the material flow.

In this patent application "warehouse" means any premises where material is handled and/or stored, whereby material is transported to and from the warehouse. A warehouse does not necessarily have to be a building, but also open air premises may serve as a warehouse.

In this patent application "transport vehicle" can mean any vehicle which is used for transporting materials/goods. It may be a lorry, a truck, a train, a ship, or an aeroplane, for example. If transport distances are short, the transport means may also be a forklift, a wheel loader, a stacker, a crane or a straddle carrier, for example.

In this patent application "transfer means" can mean any means that can be used for transferring material/goods on relatively small distances within premises, such as warehouse, manufacturing plant or port areas, for example. Such transfer means include forklifts, wheel loaders, cranes, straddle carriers etc.

In this patent application "material" and "goods" may mean any matter which is transported; it may be single consignments, bulk materials or liquids, for example.

### Short description of the drawings

In the following part the preferable exemplary embodiments of the invention are described in more detail by referring to the enclosed drawings, in which:
Figure 1 illustrates material flows at a warehouse according to prior art;
Figure 2 illustrates a flow diagram of one embodiment of a method according to the invention for monitoring stock material flow;
Figure 3 illustrates a flow diagram of one embodiment of a method according to the invention for monitoring transport material flow; and
Figure 4 illustrates an embodiment of a system according to the invention for monitoring material flows at warehouse premises.

### Detailed description of the invention

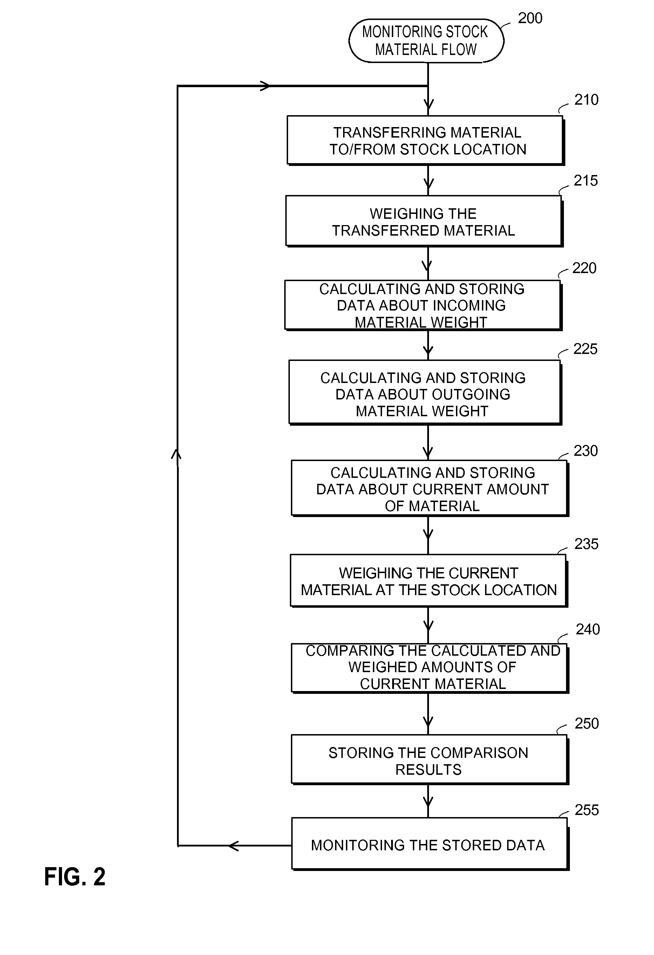

Figure 2 illustrates one method according to the invention for monitoring material flow in a stock, 200, wherein the setting place is a stock location. In phase 210 material is transferred to a stock location, or transferred from a stock location. The transfer may commonly be performed with a transfer means, such as a forklift, wheel loader, stacker, crane or straddle carrier. When material is transferred, the material being transferred is weighed, phase 215. The weighing is preferably performed when the material has been loaded on the material transfer means. The material transfer means thus preferably includes scales for measuring loads under transfer. If material is transferred into the stock location, the weight value of the transferred incoming material is preferably stored. Similarly, if material is transferred out from the stock location, the weight value of the outgoing material is preferably stored.

It is possible to derive the changes of material weight at the stock location by summing the weights of incoming material and subtracting weights of the outgoing material, 230. If an initial weight of the material at the stock location is known, the current weight of the material can be calculated on the basis of the weight changes. This way, it is possible to have real time information on the material weights in stock, and it is easy to perform an inventory.

Data of the material weighing results are preferably stored in server equipment, which is connected to data network such as Internet. This allows users to read the weighing data at various locations with terminals connected to the data network, independently on the distance from the stock.

It is also possible that the stock location is provided with scales which can be used for weighing the weight of material at the stock location, phase 235, in order to achieve reference data of the material. If material losses would not exist, the calculated value of the current material weight would be equal to the value achieved by weighing with the scales at the stock location. On the other hand, if material is lost during storage or transfers, the actual weight value measured by the scales at the stock location would be lower than the value achieved by calculation of the transferred material weights. Thus it is possible to detect material losses by comparing the said weighing values, 240.

The results of the weight comparison are preferably stored in the server system, phase 250, whereby it is possible to monitor the material flows, phase 255, including the detection of possible material losses. The process of phases 205-255 can be continuous, i.e. the phases are repeated according to the material flow and monitoring needs. It is possible to have continuously updated real time inventory information on the stock, as well as information on the amounts of incoming and outgoing materials.

It is further possible that the monitoring system monitors determined weight measurement values, calculated material amounts in stock locations, or reference calculation results by comparing said values/results with a threshold value. Such a threshold value can be determined for the concerned value/result to be monitored, and stored to the monitoring system, e.g. to the server equipment or a user terminal. The threshold value can be determined to be fixed in the system, e.g. the same for all users, or the threshold value may be individually set by each user. It can be determined that the system gives an alarm indication for the user if the monitored value exceeds (or alternatively goes below) the threshold value. The threshold value can also be a logical parameter. Thus an alarm indication can be given if e.g. the result to be monitored is equal (or unequal) to the threshold value. The alarm indication can be shown in the user interface display of the user terminal, or it is possible that an alarm message is transmitted to the user with an SMS message, or some other known wired or wireless communications can be used for transferring the alarm indication to a user. With this kind of alarm functionality the user can get immediate information e.g. relating to the weight of material in a determined setting place, weights of materials transferred to or from the setting place, and detected losses of material.

Depending on the value/result which is compared with the threshold value to give a possible alarm indication, these phases of alarm monitoring can be implemented e.g. between phases 215 and 220, 220 and 225, 225 and 230, 230 and 235, 235 and 240, 240 and 250, between 250 and 255, or within phase 255. Naturally, the alarm monitoring can be provided in two or more points within the flow diagram, and the alarm monitoring may also be divided into sub-phases.

In the method of Figure 2, reference data is provided from scales that are installed at the shelves of a warehouse. However, there are many other alternatives to provide reference data, such as reading material data from a stock account system, barcodes or RFID devices attached to the materials or from some other source.

It is also possible to provide weighing device, transfer means or a transport vehicle with a location determination means, such as a GPS (Global Positioning System) device. This way it is possible to store information on the weighing location together with the weighing results, and the monitoring system thus gets the information on where the weighing has been done. For example, it is possible to detect whether the weighing has been done at the storage location, in a location of a transport vehicle, at a location of a production line of a factory or at a material feeding location of a power plant, for example.

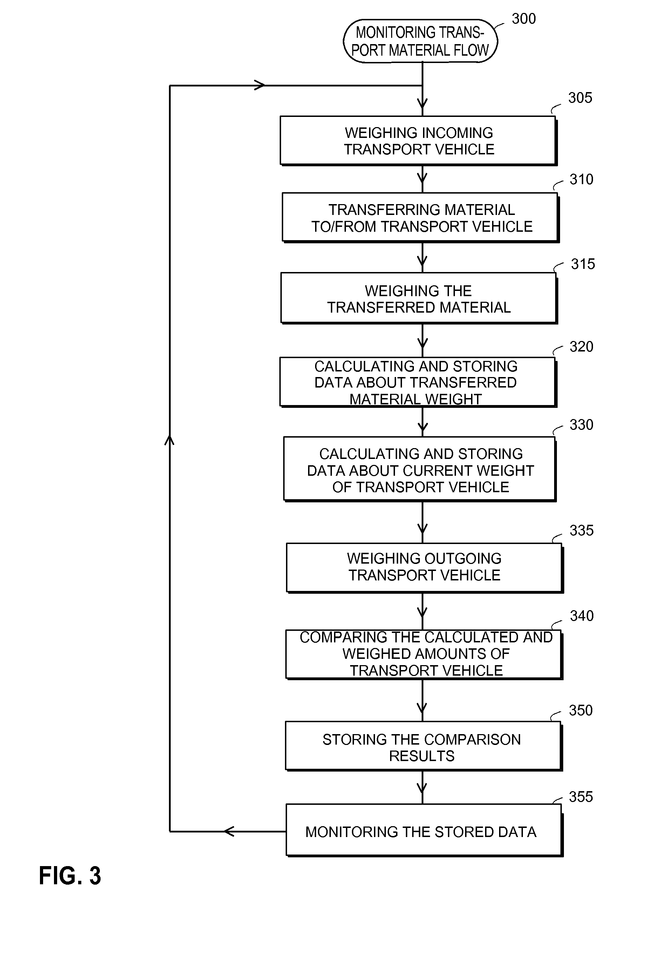

Figure 3 illustrates an exemplary method according to the invention for monitoring material flow in transportation of material, 300, wherein the setting place is a transport location. When a transport vehicle, such as a truck, enters warehouse premises, the transport vehicle is optionally weighed in phase 305. In phase 310 material is transferred to a stock location, or transferred from a stock location. As mentioned above, the transfer may commonly be performed with a transfer means, such as a forklift, a wheel loader, a stacker, a crane, a straddle carrier etc. When material is transferred, the material to be transferred is weighed, phase 315. The weighing is preferably performed when the material has been loaded on the material transfer means. The material transfer means thus preferably includes a weighing device for measuring loads under transfer. When material is transferred into the transport location of the transport vehicle, the weight value of the transferred material is preferably stored. Similarly, if material is transferred out from the transport location of the transport vehicle, the weight value of the outgoing material is preferably stored. The transport location means here a place, such as a trailer, a platform or a container, of a transport vehicle where the material is located during transport.

It is possible to derive the change of material weight at the transport vehicle by summing the weights of the loaded material and subtracting weights of the unloaded material, 330. Data of the material weighing and calculation results are preferably stored in server equipment, which is connected to data network such as Internet. This allows users to read the weighing data at various locations independently on the distance from the premises where the transport vehicle is loaded/unloaded.

When the transport vehicle exits the warehouse premises, the outgoing vehicle is optionally weighed in phase 335. The transport vehicle is thus weighed when it enters the warehouse premises and when it exits the warehouse premises in order to achieve reference data of the load weights. The difference of those two weight values normally corresponds to the change of load. The change of load can therefore be derived in two ways: on the basis of the loaded/unloaded material weights and on the basis of the change in the weight of the transport vehicle (reference data). By comparing these weight values, phase 340, it is possible to detect whether material loss has occurred. When there are no material losses, these values are the same. On the other hand, if material is lost during the time the transport vehicle is in the warehouse premises, there is a difference in those weights. If the weight of the outgoing transport vehicle is higher than what it should be based on the loaded and unloaded goods, it is apparent that there are goods in the transport vehicle which have not been recorded. If the weight of the transport vehicle is lower than what it should be based on the loaded and unloaded goods, it is apparent that some goods that have been loaded into the transport vehicle have been disappeared. Thus it is possible to detect material losses by comparing said weighing/calculated values, 340.

Instead of comparing load change, it is also possible to compare calculated and weighed weight of the transport vehicle. In this case, the weight of the transport vehicle may be calculated on the basis of the weighed change of load and the initial weight of the incoming transport vehicle, 330. This calculated weight of the outgoing transport vehicle may then be compared with the result of weighing the outgoing vehicle 340.

The results of the weight comparison are preferably stored in the server system, phase 350, whereby it is possible to monitor the material flows, phase 355, including the detection of possible material losses. The process of phases 305-355 can be continuous, i.e. the phases are repeated according to the material flow and monitoring needs.

As described in connection with the description of Figure 2, it is also possible that the monitoring system monitors determined weight measurement values, calculated material amounts in transport locations, or reference calculation results by comparing said values/results with a threshold value. Such a threshold value can be determined for the concerned value/result to be monitored, and stored to the monitoring system, e.g. to the server equipment or a user terminal. It can be determined that the system gives an alarm indication for the user if the monitored value exceeds (or alternatively goes below) the threshold value. The threshold value can also be a logical parameter. Thus an alarm indication can be given if e.g. the result to be monitored is equal (or unequal) to the threshold value. The alarm indication can be shown in the user interface display of the user terminal, or it is possible that an alarm message is transmitted to the user with an SMS message, or some other known wired or wireless communications can be used for transferring the alarm indication to a user. With this kind of alarm functionality the user can get immediate information e.g. relating to the weight of material in a determined setting place, weights of materials transferred to or from the setting place, and detected losses of material.

Depending on the value/result which is compared with the threshold value to give a possible alarm indication, these phases of alarm monitoring can be implemented e.g. between phases 305 and 310, 315 and 320, 320 and 330, 330 and 335, 335 and 340, 340 and 350, between 350 and 355, or within phase 355. Naturally, the alarm monitoring can be provided in two or more points within the flow diagram, and the alarm monitoring may also be divided into sub-phases.

As one alternative for monitoring transported material flows it is also possible to use the described weighing of the incoming and outgoing transport vehicles as a primary weighing of the material loads. The reference data can thus be based on information received from stock accounting system or bar codes or RFID devices of the load materials. The reference data is then compared with the weight change of the transport vehicle between the weighings performed at the entering and exiting the warehouse premises.

Methods for monitoring material flows at a stock location and at a transport location have been described above, referring to Figures 2 and 3. However, it should be noted that it is useful to combine both embodiments for monitoring material flow in stock locations as well as transport locations. The monitoring data can be stored at a same server and same weighing data can be used for monitoring material flow at the stock location as well as in the transport. For example, when material is transferred from a stock location of a warehouse to a transport location of a transport vehicle, it is possible to weigh once the material under transfer and use this information for monitoring material flow of storage as well as transport. If there is e.g. a factory or a power plant within the logistic flow, it is also possible to monitor the consumption of various materials in the factory/power plant. Also, it is possible to monitor the amounts of produced products of a factory in a similar manner. The data of the material flows and current material amounts in storage, amounts of transported materials, amounts of consumed materials and produced products as well as possible material losses are available at the server equipment from which the data can be read by a user through a data network. Also, as described above, a user can set threshold values for any of described data, and receive alarm indications, if the data reaches any of the set thresholds.

It is also possible to use the monitoring system according to the invention for monitoring material flow in and between two or higher number of warehouse premises. Material data from the various warehouse locations can be stored at the same server equipment. With such a system it is also possible to detect possible material losses that may occur during transportation. A certain transport vehicle can be weighed when it exists first warehouse premises and when it arrives the next, second warehouse premises. If there no material losses have occurred during the transportation, the weight of the load should be the same in both weighings. The only substantial difference in the weighing results of the transport vehicle should then correspond to the change in the amount of fuel in the transport vehicle during the transportation, and a possible change in the number of passengers in the transport vehicle.

The weight change of the load can thus be determined by compensating the weight change of the transport vehicle with the weight change of the fuel, and a possible change in the number of onboard persons. If the weight of the material load has decreased, this would suggest that material losses have occurred during the transportation.

The change in the amount of fuel can be determined based on the distance of travelling between the two locations of weighing. When approximate average fuel consumption (weight of used fuel within a travelling distance unit) of the transport vehicle is known, an approximate amount of used fuel during travelling between the two weighing locations can be achieved by multiplication with the average consumption. It is also possible to use the travelling time between the two weighing locations for determining the approximate consumption of fuel. The travelling time can be calculated based on the points of time when the weighing of the transport vehicle has bee weighed in the two locations (time of leaving a first location and time of entering the second location). The monitoring system of the material flow may thus include clock means for measuring time and means for detecting and storing the points of time for weighing incidents.

It is also possible that the transport vehicle is refuelled during the travelling between two weighing locations. In this case the amount of refuelled fuel should be considered in compensating the weight of load. The information of the possible refuelling can be e.g. received from the driver who may input the information of the refuelling into the monitoring system.

Further, it is possible that the information on the fuel consumed fuel, current amount of fuel and/or refuelling is registered by an on-board computer of the transport vehicle, and this information is transferred to the monitoring system. It is also or alternatively possible that information on the travelled distance and/or time is transferred from an on-board computer to the monitoring system in order to estimate the consumed fuel or for other purposes. The transfer of this data can be implemented by using common wireless or wired communication systems, such as cellular communications, WLAN or Bluetooth data transfer.

The monitoring system may also have cameras at the locations where the transport vehicles are weighed. The camera may take an image of the driver's cabin, and determine the number of passengers in the cabin. This determination can be made by using pattern recognition, for example. This way it is possible for the monitoring system to detect any changes in the number of passengers during the travelling between two weighing locations. Thus the weight of load can be compensated by the change in the number of passengers. An average weight of a passenger can be used for this purpose, for example. If an on-board computer of the transport vehicle has information on the number of passengers, it is also possible to receive this information from the on-board computer to the monitoring system of material flows.

In the above example, material is transported between two locations, such as warehouses. However, it should be noted that the transportation may take place also or alternatively within single premises. Such single premises may include one or several warehouses, manufacturing plant, port etc. between which material is transported. In this case, when the transport distances are shorter the transport vehicle may be a forklift, a wheel loader, a stacker, a crane, a straddle carrier etc.

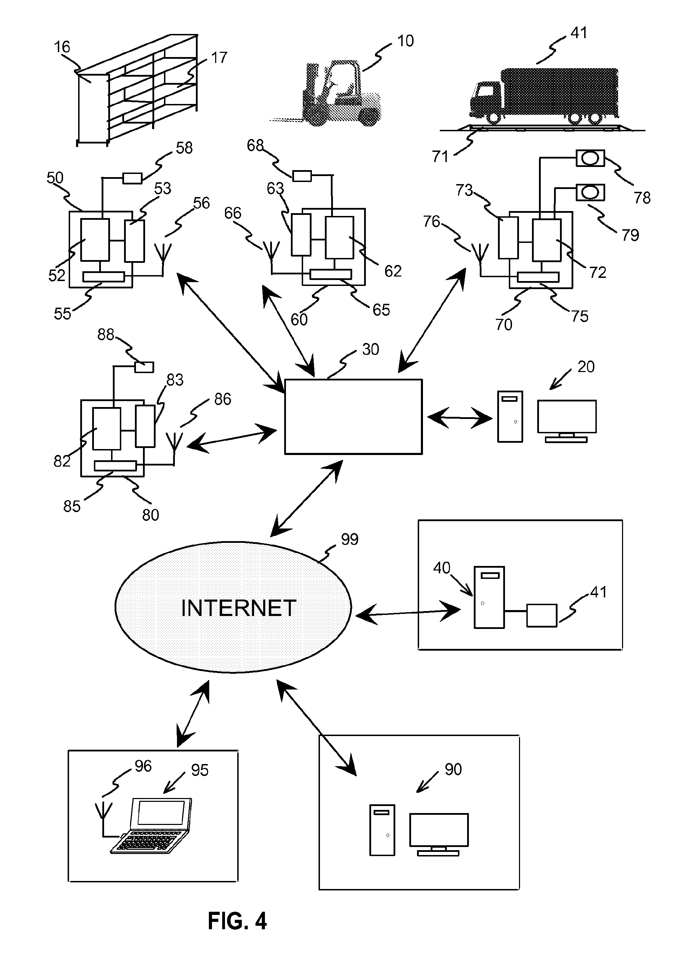

Figure 4 illustrates an exemplary system according to the invention for monitoring material flows. A material transfer means 10, such as a forklift, has weighing device 60 for weighing the material to be transferred. The weighing device includes a sensor 68, such as a pressure sensor, which can be installed in a lifting cylinder of a forklift. A measurement unit 62 of the weighing device receives the signals achieved from the sensors and calculates the weighing result. The weighing result may be shown to the user on a user interface 63, which includes a display, for example. The user interface has preferably also input means, such as a keyboard, by means of which the functions of the weighing device can be controlled. The measurement device also has a data transfer unit 65 for transferring data electrically between the measurement device and another device. The measurement device further has means 66 for transferring data through radio waves.

The weighing unit may also include reading means for e.g. reading information from barcodes or RFID devices which may be attached to the materials that are transferred. Such data can be used as reference data. Bar codes or RFID devices may also be located at setting places, so that it is possible to determine the location of weighing and/or loading/unloading by reading the bar code / RFID data. It may also be useful that the weighing device / transfer means is equipped with positioning means such as a GPS device. From such a device it is possible to receive location data about the location of weighing or loading/unloading. Such positioning data is useful for determining the locations of materials being stored/transferred. The measurement results and possible other information related to the materials are transferred from the weighing device to a data acquisition unit 30. The data transfer may have many alternative forms such as wireless data transfer by RF. The data acquisition unit collects the data which relates to weighing results and transfers the processed data to server equipment 40. The data acquisition unit may include the server equipment or the server equipment may locate at some other location. The server is connected to a data transfer network, such as Internet 99. If the server is located at a distance from the data acquisition unit the data acquisition unit is preferably connected to the network as well in order to transfer the collected data to the server equipment. The data is stored in a memory device 41 of the server equipment, and the users can read the stored data via the network. For this purpose, the users may have e.g. desktop computers 90 with a fixed connection to the internet, or portable laptop computers 95 with wireless connection 96 to the Internet.

The server equipment may have a functionality of processing the received data. For example, the server may calculate cumulative material flows concerning certain material or certain setting place. It is also useful to calculate the current amount, e.g. weight, of material in certain/each setting place and display such online data of material quantities for the user. The current amounts of materials can be counted by adding the amount of each material set which is transferred to the setting place and subtracting the amount of each material set which is transferred out from the setting place to/from the initial amount of material in the setting place prior to the concerned material transfer. This way it is possible to have continuously updated inventory data of the various materials, included with the location information of the materials.

As was described above in connection with Figures 2 and 3, the weighing information on the transferred materials can be monitored by reading the stored data from the server equipment through a data network.

The weighing information may include positioning data determining the location of the weighing, according to which data it is possible to determine where the material is loaded/unloaded. The information stored in the server may also include reference data. This data can be arranged to show the material flows (materials in storage locations, incoming materials, outgoing materials, consumed materials, produced materials, transported materials, etc.) in a visualized manner.

There may also be alarm functionalities in the server equipment or user terminal. The user or administrator may set threshold values for certain weight values or related results as was described above. E.g. the server equipment may show an alarm for the user at the user interface when the monitored magnitude has exceeded, gone below, become equal or reach another determined condition in relation to the threshold value. It is also possible that the server equipment sends an alarm message for the user in such a situation by using e.g. cellular communication or some other means of communication. It is also possible that the alarm functionalities are programmed into a user terminal, and the alarms are based on the data which is read from the server equipment.

Optional reference data of the materials can be received, for example, from a stock accounting system 20. It is also possible that the stock locations 17 of the warehouse have scales for weighing the weight of the material which is currently located at the stock location of the stock 16. The scales 50 may have one or several sensors 58. A measurement unit 52 of the weighing device receives the signals achieved from the sensors and calculates the weighing result. The weighing result may be shown to the user on a user interface 53, which includes a display, for example. The scales also has a data transfer unit 55 for transferring data electrically between the scales and the data acquisition unit 30, for example. The scales can have means 56 for transferring data through radio waves, or alternatively wired data transfer can be used.

If transport vehicles are weighed in the system, the system may include a weighbridge 71. The transport vehicles 14 drive onto the weighbridge when entering or exiting the warehouse premises. The weighbridge has weighing equipment 70 which includes weighing sensors 78 and 79. A measurement unit 72 of the weighing device receives the signals achieved from the sensors and calculates the weighing result. The weighing result may be shown to the user on a user interface 73, which includes a display, for example. The scales also has a data transfer unit 75 for transferring data electrically between the scales and the data acquisition unit 30, for example. The scales can have means 76 for transferring data through radio waves, or alternatively wired data transfer can be used. The weighing data is transferred to the data acquisition unit 30 and further transferred to the server equipment for the storage of the data.

The system may also include means for receiving information from an on-board computer of a transport vehicle. There may be a data connection unit (not shown in Figure 4) at the weighbridge for a connection between the monitoring system and the on-board computer. In such a case, short range wireless data transfer can be used between the on-board computer and the data connection unit, as an example. However, it is also possible to use other kinds of data transfer, such as WLAN or cellular communications. It is also possible that the weighbridge has a manual user interface for inputting data concerning the transport vehicle, passengers and/or load. More specifically, the data to be transferred to the monitoring system, may preferably include the amount of fuel in the transport vehicle, the amount of passengers in the transport vehicle and identity information of the transport vehicle. This information can be used for compensating weighing results and for identifying the transport vehicle under weighing.

The system may also have reader units 80 for reading data from barcodes, magnetic tapes, RFID devices etc. which may be attached to the materials and/or setting places. An exemplary reader unit 80 has a reading component which may be e.g. a magnetic reader, an inductive reader or an optical reader. The signal received from the reader component is received and detected at a measurement unit 82, which processes the signal. The read data may be shown to the user on a user interface 83, which includes a display, for example. The reader unit also has a data transfer unit 85 for transferring data electrically between the reader unit and the data acquisition unit 30, for example. The reader unit can have means 86 for transferring data through radio waves, or alternatively wired data transfer can be used. The read data can be transferred to the data acquisition unit 30 and further transferred to the server equipment for the storage of the data.

The data transfer between the units within warehouse premises can be implemented by means of e.g. a wired data transfer network (LAN, for example), a short range wireless data transfer (WLAN, Bluetooth data transfer) or by using e.g. public wireless cellular network.

The data transfer between the data acquisition unit and the Internet can be implemented by using wired data transfer such as PSTN (public service telephone network) or wireless data transfer such as e.g. public cellular network data transfer, such as GSM (Global System for Mobile Communications), UMTS (Universal Mobile Telephone Service), GPRS (General Packet Radio Service) data transfer. It is also possible to have the functionality of the data acquisition unit at a remote location within or connected to the server equipment. In this case, each unit may connect to the network and transfer the data independently.

A computer 40 serving as server equipment has means for connecting to the data network and means for receiving or loading data from the data network as well as means for transmitting data to terminals connected to the network. The computers also typically have at least one processor for processing data, at least one memory unit, which may comprise RAM i.e. central memory (Random Access Memory) as well as ROM i.e. permanent memory (Read only Memory), and additionally intermediate memory. There is a memory device 41 connected to or included in the server. The memory device may be e.g. a hard disc drive or a flash memory.

The invention has been described with the reference to the enclosed embodiments. It is, however, clear that the invention is not restricted only to those, but is comprises all embodiments which can be imagined within the inventive idea and the enclosed patent claims.

One must note, for example, that the invention is not in any way restricted to the use of only those data transfer connections or data networks which are mentioned in this description, but the idea can be applied and used in any data transfer and network solutions. Also, the invention is not in any way limited to the use of the reference data which has been mentioned in the description as examples.

## Claims

1. Method for monitoring material flows, in which material flow material is transferred to at least one setting place, and material is transferred out from said at least one setting place (210, 310), **characterised in that** the method includes at least the following phases:
- at least one piece of material is transferred to or from a setting place (210, 310),
- said piece of material is weighed in connection with the transfer in order to achieve a weighing result (215, 315),
- the weighing result or related data is stored in a server equipment (220, 225, 320), and
- at least part of the data stored in the server equipment is read via a data transfer network, such as Internet, in order to monitor the material flow (255, 355).

2. Method according to claim 1, **characterised in that** a current amount, such as weight, of material at a setting place is determined on the basis of the weight of material which is transferred from and/or to the setting place and the amount of material located in the setting place before said transfer of material, and information on said current amount of material is stored.

3. Method according to claim 1 or 2, **characterised in that** reference data relating to the materials in the setting place is stored in the server equipment, and the weighing result and the reference data are compared in order to achieve a comparison result (240, 340).

4. Method according to claim 3, **characterised in that** the reference data is based on information on the materials at the setting place, which information is read from a stock accounting system, from RFID devices connected to the materials and/or from barcodes.

5. Method according to claim 3 or 4, **characterised in that** material at the setting place is weighed in order to achieve value of the current material weight at the setting place, and said current material weight is used as the reference data.

6. Method according to any of the preceding claims, **characterised in that** the setting place is located in a warehouse, and used for stocking with material.

7. Method according to any of the preceding claims, **characterised in that** the setting place is within a transport vehicle for transporting material.

8. Method according to claim 7, **characterised in that** material to be loaded into the transport vehicle is weighed, and/or material to be unloaded from the transport vehicle is weighed in order to achieve data about the weight change of the load due to the loading/unloading.

9. Method according to claim 7 or 8, **characterised in that** the transport vehicle is weighed before and after loading/unloading of the transport vehicle, and data related to the measured weight of the transport vehicle is stored as weighing result data or reference data.

10. Method according to any of claims 7-9, **characterised in that** a transport vehicle is weighed when it exits from first warehouse premises to achieve a first vehicle weight and the transport vehicle is weighed when it enters second warehouse premises to achieve a second vehicle weight, wherein the first and second vehicle weights are compared in order to detect possible loss of load of the vehicle.

11. Method according to any of the preceding claims, **characterised in that** a threshold value is stored, and the threshold value is compared with a weighing value or a related result, and an alarm indication is given for the user on the basis of said comparison.

12. System for monitoring material flows, in which material flow material is transferred to at least one setting place, and material is transferred out from said at least one setting place with transfer means, **characterised in that** the system includes:
- weighing means (60-68) in connection with the material transfer means (10) for measuring weight of at least one piece of material (21) which is transferred to or from a setting place (17, 14), to achieve a weighing result,
- server equipment (40, 41) including means for storing said weighing result or related data,
- means for connecting the server to a data transfer network, such as Internet (99), to facilitate reading (90-96) of data stored in the server equipment via the network.

13. System according to claim 12, **characterised in that** it comprises means (50-58) for determining the current amount, such as weight, of material at a setting place (17) on the basis of the weight of material which is transferred from and/or to the setting place and of the amount of material located in the setting place before said transfer of material, means (41) for storing information on said current amount of material.

14. System according to claim 12 or 13, **characterised in that** the server equipment (40, 41) includes means (41) for storing reference data relating to the materials at the setting place.

15. System according to claim 14, **characterised in that** the reference data is based on information on the materials at the setting place (17), and the system comprises means (30, 80-88) for reading said information from a stock accounting system (20), from RFID devices and/or from barcodes connected to the materials.

16. System according claim 14 or 15, **characterised in that** the setting place has scales (50-58) for weighing material placed at the setting place, whereby the weighing result of the scales serves as reference data.

17. System according to any of claims 12-16, **characterised in that** the setting place is located in a warehouse (16) for stocking with material.

18. Method according to any of claims 12-16, **characterised in that** the setting place is located in a transport vehicle (14) for transporting material.

19. System according to claim 18, **characterised in that** it comprises means (60-68) for weighing material to be loaded into the transport vehicle, and/or material to be unloaded from the transport vehicle in order to achieve data about the weight change of the load due to the loading/unloading.

20. System according to claim 18 or 19, **characterised in that** it comprises means (70-78) for weighing the transport vehicle (14) before and after loading/unloading of the transport vehicle, and means (41) for storing data related to the measured weights of the transport vehicle as weighing result data or reference data.

21. System according to any of claims 12-20, **characterised in that** the system has a first means at first warehouse premises for weighing a transport vehicle when it exits from the first warehouse premises to achieve a first transport vehicle weight, and the system has means at second warehouse premises for weighing the transport vehicle when it enters the second warehouse premises to achieve a second transport vehicle weight, and the system has means for storing the first and second weights of the transport vehicle for comparison in order to detect possible loss of load of the transport vehicle.
